# EUROPÄISCHE PATENTANMELDUNG

(11) **EP 2 416 205 A1**
(43) Veröffentlichungstag der Anmeldung: **08.02.2012**
(21) Anmeldenummer: 10171872.4
(22) Anmeldetag: 04.08.2010
(51) Int. Cl.: G02F 1/01, G01B 9/02

(54) **Schaltbare Lummer-Gehrcke-Platte**

(71) Anmelder: Bayer MaterialScience AG, 51368 Leverkusen (DE)
(72) Erfinder: Jenninger, Werner, 51368 Leverkusen (DE); Wagner, Joachim, 51368 Leverkusen (DE); Benecke, Carsten, 51368 Leverkusen (DE)

(57) **Zusammenfassung**

Die vorliegende Erfindung betrifft eine Lummer-Gehrcke-Platte. Sie betrifft weiterhin ein Interferometer, welches eine erfindungsgemäße Lummer-Gehrcke-Platte umfasst, ein Verfahren zum Betreiben eines solchen Interferometers sowie die Verwendung einer erfindungsgemäßen Lummer-Gehrcke-Platte. In der Lummer-Gehrcke-Platte (1) für ein Interferometer umfasst die Lummer-Gehrcke-Platte (1) wenigstens ein dielektrisches Elastomer (2) sowie zwei an gegenüberliegenden Seiten des dielektrischen Elastomers (2) angeordnete Elektroden (3, 4) und der Brechungsindex der Lummer-Gehrcke-Platte zwischen den beiden Elektroden (3, 4) ist durch Anlegen einer elektrischen Spannung an die Elektroden (3, 4) veränderbar. Solche Platten eignen sich insbesondere zur Verwendung in einem Lummer-Gehrcke-Interferometer.

## Beschreibung

Die vorliegende Erfindung betrifft eine schaltbare Lummer-Gehrcke-Platte. Sie betrifft weiterhin ein Interferometer, welches ein erfindungsgemäße schaltbare Lummer-Gehrcke-Platte umfasst, ein Verfahren zum Betreiben eines solchen Interferometers sowie die Verwendung einer erfindungsgemäßen Lummer-Gehrcke-Platte.

Interferometer sind Vorrichtungen zur Bestimmung von Interferenzen zur Präzisionsmessung von Längen, Brechzahlen, Winkeln sowie zum Einsatz in der Spektroskopie. Die Art und Lage der Interferenzmuster geben Aufschluss über die Interferenzen beziehungsweise die die Interferenzen hervorrufenden Faktoren.

Ein Typ eines Interferometers ist ein Lummer-Gehrcke-Interferometer. Das Lummer-Gehrcke-Interferometer umfasst eine planparallele Platte, die sogenannte Lummer-Gehrcke-Platte. Diese weist einem Brechungsindex von größer als 1 auf und hat im Längsschnitt die Gestalt eines schlanken Rechtecks, das an einem Ende mit einem kohärenten Lichtstrahl beleuchtet wird.

Der Lichtstrahl wird beim Eintritt in die Platte an der Plattenoberfläche teilweise reflektiert und teilweise gebrochen. Der gebrochene Teil des Lichtstrahls durchdringt die Platte und erreicht die andere Oberfläche der Platte, wird dort ebenfalls wieder teilweise ins Platteninnere reflektiert und beim Austritt aus der Platte gebrochen. Der an der Oberfläche ins Platteninnere reflektierte Lichtstrahl durchläuft die Platte und wird erneut an der ersten Oberfläche teilweise ins Platteninnere reflektiert, teilweise transmittiert und beim Austritt aus der Platte gebrochen. Der reflektierte Strahl erreicht wieder eine Plattenoberfläche, wird neuerlich teilweise reflektiert und teilweise transmittiert.

Damit erfährt der Lichtstrahl eine vielfache Reflexion auf seinem Weg zwischen den Plattenoberflächen. Bei jeder Reflexion an einer Plattenoberfläche tritt ein Teil des Strahles aus der Platte aus. Es werden nun die aus der Platte austretenden Strahlen durch eine Sammellinse fokussiert. Die auf diese Weise erzeugten kohärenten Lichtstrahlen interferieren.

In der Brennebene der Sammellinse bilden einerseits die Lichtstrahlen, die von der beleuchteten Plattenoberfläche stammen, ein Interferenzmuster. Ebenso bilden auch die Lichtstrahlen ein Interferenzmuster, die von der nicht beleuchteten der Plattenoberfläche herrühren. Die Lichtstrahlen von oder aus der beleuchteten Plattenoberfläche werden das reflektierte Licht genannt und die Lichtstrahlen aus der nicht beleuchteten Oberfläche werden das transmittierte Licht genannt. In der Brennebene der Sammellinse werden Intensitätsverteilungen erzeugt.

Im transmittierten Licht sind die Maxima in Relation zu ihrem Abstand umso schmaler, je mehr Strahlen zu Interferenz kommen. Dies ist auch abhängig von den Reflexionseigenschaften der Plattenoberflächen. Im reflektierten Licht zeigen sich analog umso schärfere und schmälere Minima, je mehr Lichtstrahlen zur Interferenz kommen.

Wird der Lichtstrahl beispielsweise mit Hilfe eines Prismas in die planparallele Platte eingekoppelt, so dass eine Reflexion des eingestrahlten Lichtes an der Plattenoberfläche unterbunden ist, so gibt es auch kein reflektiertes Licht, und die Intensitätsverteilungen des Lichtes von beiden Plattenoberflächen gleichen einander. Auf beiden Plattenseiten erhält man nur transmittiertes Licht und eine entsprechende Intensitätsverteilung der Vielstrahlinterferenz.

Schaltbare optische Strukturen sind für vielfältige Anwendungen interessant. Ein Weg zur Beeinflussung der optischen Eigenschaften einer Struktur nutzt die piezoelektrischen Eigenschaften bestimmter Materialien aus. In dieser Hinsicht beschreibt WO 2006/127285 A1 beispielsweise geschichtete Filme, die eine Kombination von piezoelektrischen Schichten, welche ihre Abmessungen bei Anlegen einer Spannung ändern, und nicht-piezoelektrische Schichten aufweisen. Die geschichtete Struktur kann einen weiten Bereich elektrisch schaltbarer optischer Filme ausbilden. Diese Filme können in Anzeigen, Polarisationsfiltern, optischen Kompensatoren, ästhetischen Filmen und "heißen" und "kalten" Spiegeln, welche nur bestimmte Wellenlängen reflektieren, eingesetzt werden. Es werden auch monochromatisches und Mehrfarbanzeigen offenbart, in welchen diese Filme Verwendung finden.

Gänzlich andere Wege zur Kontrolle der Bewegung einer adaptiven Struktur werden in US 6,188,160 aufgezeigt. Dieses Patent offenbart ein intelligentes Materialkontrollsystem und ein entsprechendes Verfahren zur adaptiven Kontrolle der Bewegung einer adaptiven Struktur. Die adaptive Struktur umfasst eine intelligente Materialschicht, welche in einer dimorphen Konfiguration an eine leitfähige Oberfläche gebunden ist. Ein Ladungsprojektor, wie beispielsweise eine Elektronenkanone, wird zur Projektion von Ladungen auf die intelligente Materialschicht der adaptiven Struktur genutzt. Eine Spannung/Ladungsquelle regelt adaptive das Potential des leitfähigen Substrats. Abhängig von der Lage der aufgebrachten Ladung und dem adaptiv geregelten Potential des leitfähigen Substrats wird die Abtragung/Kurvatur präzise kontrolliert. In einer alternativen Ausführungsform sind zwei intelligente Materialschichten miteinander verbunden, um eine adaptive Struktur auszubilden, welche unabhängig in x- und y-Richtung kontrolliert werden kann. Es kann auch ein Array von Ladungsprojektoren und/oder leitfähigen Substratabschnitten genutzt werden, um Variationen und eine breite Kontrolle der adaptiven Strukturen zu ermöglichen.

Die im Stand der Technik genannten Lösungen für abstimmbare oder schaltbare Interferometer sind jedoch weiter verbesserungswürdig. Der vorliegenden Erfindung liegt daher die Aufgabe zugrunde, eine Lummer-Gehrcke-Platte der eingangs genannten Art anzugeben, welche einen einfachen Aufbau und die Möglichkeit einer Abstimmung über weitere Distanzbereiche aufweist.

Die Aufgabe wird erfindungsgemäß durch eine Lummer-Gehrcke-Platte gelöst, die sich dadurch auszeichnet, dass diese wenigstens ein von eingekoppeltem Licht durchstrahltes dielektrisches Elastomer sowie zwei an gegenüberliegenden Seiten des dielektrischen Elastomers angeordnete Elektroden umfasst und der Brechungsindex n_{D} und/oder die Dicke der Lummer-Gehrcke-Platte durch Anlegen einer elektrischen Spannung an die Elektroden veränderbar ist.

Durch das Anlegen einer elektrischen Spannung an diese vorzugsweise planparallelen Elektroden und somit an das dielektrische Elastomer ändern sich die Abmessungen der Lummer-Gehrcke-Platte. Abhängig vom Material kann es dabei auch zu einer Änderung des Brechungsindexes n_{D} innerhalb des Elastomers kommen. Vorzugsweise ist dieses der Brechungsindex n_{D} bei 20 °C und einer Wellenlänge von 589 nm.

Insgesamt ergibt sich eine geänderte Vielstrahlinterferenz. Interferenzstreifen gleicher Neigung können sowohl im transmittierten als auch im reflektierten Licht modifiziert werden.

Bedingt durch die Möglichkeit, nach Belieben eine elektrische Spannung anlegen zu können, ist die erfindungsgemäße Lummer-Gehrcke-Platte schaltbar. Im Vergleich zu piezoelektrischen Wandlern erlauben dielektrische Elastomere auch weitere Auslenkungen beim Anlegen einer elektrischen Spannung.

Die Wellenlänge des eingekoppelten Lichts ist zunächst nicht weiter festgelegt. Ausdrücklich mit eingeschlossen sind sichtbares Licht, UV-Licht und IR-Licht.

Eine Klasse von Aktoren sind elektroaktive Polymere, wie sie unter anderem in WO 2001/06575 A1 erwähnt werden. Diese Patentanmeldung offenbart einen Energieumwandler, seine Verwendung sowie seine Herstellung. Der Energieumwandler wandelt mechanische Energie in elektrische Energie um. Einige der gezeigten Energieumwandler weisen vorgespannte Polymere auf. Die Vorspannung verbessert die Umwandlung zwischen elektrischer und mechanischer Energie. Darüber hinaus wird eine Vorrichtung offenbart, welche ein elektroaktives Polymer zur Umwandlung von elektrischer Energie in mechanische Energie umfasst. Des Weiteren werden Elektroden offenbart, welche an die Form des Polymers in dem Energieumwandler angepasst sind. Auch werden Verfahren zur Herstellung einer elektromechanischen Vorrichtung offenbart, welche ein oder mehrere elektroaktive Polymere umfasst.

Als Beispiel für den Einsatz dielektrischer Elastomere auf einem anderen Gebiet der Optik sei WO 2009/104122 A1 genannt, welche eine Vorrichtung zur Erzeugung und Projektion von dynamischen Brennflächen zum Gegenstand hat, welche eine Lichtquelle und eine Einrichtung zur dynamischen Refraktion des eingestrahlten Lichts aufweist. Die Installation umfasst eine Effektoberfläche aus einem deformierbaren Material und ist mit Mitteln zur vorbestimmbaren Deformation ausgerüstet. Gemäß einer Ausführungsform kann die Effektoberfläche durch einen dielektrischen Elastomer-Aktor gebildet werden.

Die erfindungsgemäße Lummer-Gehrcke-Platte kann in einem Interferometer eingesetzt werden und kann dort mit anderen Komponenten zusammenwirken, so dass in der Gesamtbetrachtung ein schaltbares Lummer-Gehrcke-Interferometer erhalten wird.

Ausführungsformen der Erfindung werden nachfolgend geschildert, wobei die einzelnen Ausführungsformen in beliebiger Weise miteinander kombiniert werden können.

In einer Ausführungsform der erfindungsgemäßen Lummer-Gehrcke-Platte ist das Elastomer ausgewählt aus der Gruppe umfassend Polyurethan-Elastomere, Silikon-Elastomere und/oder Acrylat-Elastomere. Bevorzugt sind hierbei Polyurethan-Elastomere. Diese können durch Umsetzung eines Polyisocyanats A) und/oder eines Polyisocyanat-Prepolymers B) mit mindestens einer di- oder mehrfunktionellen, gegenüber Isocyanatgruppen reaktiven Verbindung C) in Anwesenheit eines in der Polyurethanchemie üblichen Katalysators D) hergestellt werden.

**Als Polyisocyanat A) eignen sich beispielsweise** 1,4-Butylendiisocyanat, 1,6-Hexamethylendiisocyanat (HDI), Isophorondiisocyanat (IPDI), 2,2,4 und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Uretdion-, Isocyanurat-, Biuret-, Iminooxadiazindion- oder Oxadiazintrionstruktur enthaltende Verbindungen basierend auf den genannten Diisocyanaten geeignete Bausteine der Komponente A).

Vorzugsweise kann die Komponente A) ein Polyisocyanat oder ein Polyisocyanatgemisch mit einer mittleren NCO-Funktionalität von 2 bis 4 mit ausschließlich aliphatisch oder cycloaliphatisch gebundenen Isocyanatgruppen sein. Bevorzugt handelt es sich um Polyisocyanate oder Polyisocyanatgemische der vorstehend genannten Art mit Uretdion-, Isocyanurat-, Biuret-, Iminooxadiazindion- oder Oxadiazintrionstruktur sowie Mischungen daraus und einer mittleren NCO-Funktionalität der Mischung von 2 bis 4, bevorzugt von 2 bis 2,6 und besonders bevorzugt von 2 bis 2,4.

Die als Komponente B) einsetzbaren Polyisocyanat-Prepolymere können durch Umsetzung von einem oder mehreren Diisocyanaten mit einem oder mehreren hydroxyfunktionellen, insbesondere polymeren, Polyolen gegebenenfalls unter Zusatz von Katalysatoren sowie Hilfs- und Zusatzstoffen erhalten werden. Des Weiteren können zusätzlich Komponenten zur Kettenverlängerung, wie beispielsweise mit primären und/oder sekundären Aminogruppen (NH₂- und/oder NH-funktionelle Komponenten) für die Bildung des Polyisocyanat-Prepolymers eingesetzt werden.

Das Polyisocyanat-Prepolymer als Komponente B) kann bevorzugt aus der Umsetzung von polymeren Polyolen und aliphatischen Diisocyanaten erhältlich sein. Hydroxyfunktionelle, polymere Polyole für die Umsetzung zum Polyisocyanat-Prepolymer B) können beispielsweise Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und/oder Polyesterpolycarbonatpolyole sein. Diese können zur Herstellung des Polyisocyanat-Prepolymers einzeln oder in beliebigen Mischungen untereinander eingesetzt werden.

Geeignete Polyesterpolyole zur Herstellung der Polyisocyanat-Prepolymere B) können Polykondensate aus Di- sowie gegebenenfalls Tri- und Tetraolen und Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimethylolbenzol oder Trishydroxyethylisocyanurat oder Mischungen davon eingesetzt werden.

Als Dicarbonsäuren können dabei Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols ≥ ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind dabei Adipinsäure, Isophthalsäure und Phthalsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure oder Hydroxystearinsäure oder Mischungen davon. Geeignete Lactone sind Caprolacton, Butyrolacton oder Homologe oder Mischungen davon. Bevorzugt ist dabei Caprolacton.

Ebenfalls können zur Herstellung der Polyisocyanat-Prepolymere B) Hydroxylgruppen aufweisende Polycarbonate, beispielsweise Polycarbonatpolyole, bevorzugt Polycarbonatdiole, eingesetzt werden. Beispielsweise können diese ein zahlenmittleres Molekulargewicht Mₙ von 400 g/mol bis 8000 g/mol, bevorzugt von 600 g/mol bis 3000 g/mol haben. Diese können durch Reaktion von Kohlensäurederivaten, wie Diphenylcarbonat, Dimethylcarbonat oder Phosgen, mit Polyolen, bevorzugt Diolen, erhalten werden.

Beispiele hierfür geeigneter Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A oder lactonmodifizierte Diole der vorstehend genannten Art oder Mischungen davon.

Bevorzugt enthält dann die Diolkomponente dabei von 40 Gewichtsprozent bis 100 Gewichtsprozent Hexandiol, vorzugsweise 1,6-Hexandiol und/oder Hexandiolderivate. Solche Hexandiolderivate basieren auf Hexandiol und können neben endständigen OH-Gruppen Ester- oder Ethergruppen aufweisen. Derartige Derivate sind beispielsweise durch Reaktion von Hexandiol mit überschüssigem Caprolacton oder durch Veretherung von Hexandiol mit sich selbst zum Di- oder Trihexylenglykol erhältlich. Die Menge dieser und anderer Komponenten werden derart gewählt, dass die Summe 100 Gewichtsprozent nicht überschreitet, insbesondere 100 Gewichtsprozent ergibt.

Hydroxylgruppen aufweisende Polycarbonate, insbesondere Polycarbonatpolyole, sind bevorzugt linear gebaut.

Ebenfalls können zur Herstellung der Polyisocyanat-Prepolymere B) Polyetherpolyole eingesetzt werden. Beispielsweise eignen sich Polytetramethylenglykolpolyether wie sie durch Polymerisation von Tetrahydrofuran mittels kationischer Ringöffnung erhältlich sind. Ebenfalls geeignete Polyetherpolyole können die Additionsprodukte von Styroloxid, Ethylenoxid, Propylenoxid, Butylenoxid und/oder Epichlorhydrin an di- oder polyfunktionelle Startermoleküle sein. Als geeignete Startermoleküle können beispielsweise Wasser, Butyldiglykol, Glycerin, Diethylenglykol, Trimethyolpropan, Propylenglykol, Sorbit, Ethylendiamin, Triethanolamin, oder 1,4-Butandiol oder Mischungen davon eingesetzt werden.

Bevorzugte Komponenten zur Herstellung der Polyisocyanat-Prepolymere B) sind Polypropylenglykol, Polytetramethylenglykolpolyether und Polycarbonatpolyole beziehungsweise deren Mischungen, wobei Polypropylenglykol besonders bevorzugt ist.

Dabei können polymere Polyole mit einem zahlenmittleren Molekulargewicht Mₙ von 400 g/mol bis 8000 g/mol, bevorzugt von 400 g/mol bis 6000 g/mol und besonders bevorzugt von 600 g/mol bis 3000 g/mol eingesetzt werden. Diese weisen bevorzugt eine OH-Funktionalität von 1,5 bis 6, besonders bevorzugt von 1,8 bis 3, ganz besonders bevorzugt von 1,9 bis 2,1 auf.

Neben den genannten polymeren Polyolen können auch kurzkettige Polyole bei der Herstellung der Polyisocyanat-Prepolymere B) eingesetzt werden. Beispielsweise kann Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclohexyl)propan), Trimethylolpropan, Trimethylolethan, Glycerin oder Pentaerythrit oder eine Mischung davon eingesetzt werden.

Geeignet sind auch Esterdiole des genannten Molekulargewichtsbereichs wie α-Hydroxybutyl-ε-hydroxy-capronsäureester, ω-Hydroxyhexyl-γ-hydroxybuttersäureester, Adipinsäure-(β-hydroxyethyl)ester oder Terephthalsäurebis(β-hydroxyethyl)ester.

Ferner können zur Herstellung der Polyisocyanat-Prepolymere B) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykolmonobutylether, Diethylenglykolmonomethylether, Diethylenglykolmonobutylether, Propylenglykolmonomethylether, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol oder 1-Hexadecanol oder Mischungen davon.

Zur Herstellung der Polyisocyanat-Prepolymere B) können vorzugsweise Diisocyanate mit den Polyolen bei einem Verhältnis der Isocyanatgruppen zu Hydroxylgruppen (NCO/OH-Verhältnis) von 2:1 bis 20:1, beispielsweise von 8:1, umgesetzt werden. Dabei können Urethan- und/oder Allophanatstrukturen gebildet werden. Ein Anteil an nicht umgesetzten Polyisocyanaten kann anschließend abgetrennt werden. Hierfür kann beispielsweise eine Dünnschichtdestillation verwendet werden, wobei restmonomerenarme Produkte mit Restmonomergehalten von beispielsweise ≤ 1 Gewichtsprozent, bevorzugt ≤ 0,5 Gewichtsprozent, besonders bevorzugt ≤ 0,1 Gewichtsprozent, erhalten werden. Die Reaktionstemperatur kann dabei von 20 °C bis 120 °C, bevorzugt von 60 °C bis 100 °C, betragen. Gegebenenfalls können während der Herstellung Stabilisatoren wie Benzoylchlorid, Isophthaloylchlorid, Dibutylphosphat, 3-Chlorpropionsäure oder Methyltosylat zugesetzt werden.

Weiterhin können NH₂- und/oder NH-funktionelle Komponenten zusätzlich zur Kettenverlängerung bei der Herstellung der Polyisocyanat-Prepolymere B) eingesetzt werden.

Geeignete Komponenten zur Kettenverlängerung sind organische Di- oder Polyamine. Beispielsweise können Ethylendiamin, 1,2- Diaminopropan, 1,3-Diaminopropan, 1,4-Diaminobutan, 1,6-Diaminohexan, Isophorondiamin, Isomerengemische von 2,2,4- und 2,4,4-Trimethylhexamethylendiamin, 2-Methylpentamethylendiamin, Diethylentriamin, Diaminodicyclohexylmethan oder Dimethylethylendiamin oder Mischungen davon eingesetzt werden.

Darüber hinaus können auch Verbindungen, die neben einer primären Aminogruppe auch sekundäre Aminogruppen oder neben einer Aminogruppe (primär oder sekundär) auch OH-Gruppen aufweisen, zur Herstellung der Polyisocyanat-Prepolymere B) eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexylaminopropan, 3-Amino-1-methylaminobutan, Alkanolamine wie N-Aminoethylethanolamin, Ethanolamin, 3-Aminopropanol, Neopentanolamin. Zur Kettenterminierung werden üblicherweise Amine mit einer gegenüber Isocyanaten reaktiven Gruppe wie Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, beziehungsweise geeignete substituierte Derivate davon, Amidamine aus diprimären Aminen und Monocarbonsäuren, Monoketim von diprimären Ammen, primär/tertiäre Amine, wie N,N-Dimethylaminopropylamin, verwendet.

Die als Komponente B) eingesetzten Polyisocyanat-Prepolymere oder deren Mischungen können bevorzugt eine mittlere NCO-Funktionalität von 1,8 bis 5, besonders bevorzugt 2 bis 3,5 und ganz besonders bevorzugt 2 bis 3 aufweisen.

Die Komponente C) ist eine Verbindung mit mindestens zwei isocyanatreaktiven funktionellen Gruppen. Beispielsweise kann Komponente C) ein Polyamin oder ein Polyol mit mindestens zwei isocyanatreaktiven Hydroxygruppen sein.

Als Komponente C) können hydroxyfunktionelle, insbesondere polymere, Polyole, beispielsweise Polyetherpolyole oder Polyesterpolyole eingesetzt werden. Geeignete Polyole wurden bereits vorstehend im Zusammenhang mit der Herstellung des Prepolymers B) geschildert, so dass zur Vermeidung von Wiederholungen hierauf Bezug genommen wird.

Es ist bevorzugt, dass die Komponente C) ein Polymer mit 2 bis 4 Hydroxygruppen pro Molekül, ganz besonders bevorzugt ein Polypropylenglykol mit 2 bis 3 Hydroxygruppen pro Molekül ist.

Es ist günstig, wenn die polymeren Polyole C) eine besonders enge Molekulargewichtsverteilung, das heißt eine Polydispersität (PD = Mw/Mn) von 1,0 bis 1,5 aufweisen. Bevorzugt weisen beispielsweise Polyetherpolyole eine Polydispersität von 1,0 bis 1,5 und eine OH-Funktionalität von größer 1,9 auf, und besonders bevorzugt größer oder gleich 1,95 auf.

Solche Polyetherpolyole sind in an sich bekannter Weise durch Alkoxylierung von geeigneten Starter-Molekülen, insbesondere unter Verwendung von Doppelmetallcyanid-Katalysatoren (DMC-Katalyse) herstellbar. Diese Methode ist zum Beispiel in der Patentschrift US 5,158,922 und der Offenlegungsschrift EP 0 654 302 A1 beschrieben.

Die Reaktionsmischung für das Polyurethan kann durch Mischen der Komponenten A) und/oder B) und C) erhalten werden. Das Verhältnis von isocyanatreaktiven Hydroxygruppen zu freien Isocyanatgruppen ist dabei vorzugsweise von 1:1,5 bis 1,5:1 besonders bevorzugt von 1:1,02 bis 1:0,95.

Vorzugsweise besitzt zumindest eine der Komponenten A), B) oder C) eine Funktionalität von ≥ 2,0, bevorzugt von ≥ 2,5 bevorzugt von ≥ 3,0, um in das Polymerelement eine Verzweigung oder eine Vernetzung einzuführen. Der Begriff "Funktionalität" bezieht sich bei Komponente A) und B) auf die mittlere Anzahl von NCO-Gruppen pro Molekül und bei Komponente C) auf die mittlere Anzahl von OH--, NH- oder NH₂-Gruppen pro Molekül. Diese Verzweigung beziehungsweise Vernetzung bewirkt bessere mechanische Eigenschaften und bessere elastomere Eigenschaften, insbesondere auch bessere Dehnungseigenschaften, was beim Einsatz der dielektrischen Elastomeren in erfindungsgemäßen Lummer-Gehrcke-Platten vorteilhaft ist.

Das erhaltene Polyurethanpolymer kann vorzugsweise eine maximale Spannung von ≥ 0,2 MPa, insbesondere von 0,4 MPa bis 50 MPa, und eine maximale Dehnung von ≥ 00 %, insbesondere von ≥ 120 %, aufweisen. Darüber hinaus kann das Polyurethan im Dehnungsbereich von 50 % bis 200 % eine Spannung von 0,1 MPa bis 1 MPa, beispielsweise von 0,1 MPa bis 0,8MPa, insbesondere von 0,1 MPa bis 0,3 MPa, aufweisen (Bestimmung nach ASTM D 412). Ferner kann das Polyurethan ein Elastizitätsmodul bei einer Dehnung von 100 % von 0,1 MPa bis 10 MPa, beispielsweise von 1 MPa bis 8 MPa, aufweisen (Bestimmung nach ASTM D 412).

Vorzugsweise ist das erhaltene Polyurethanpolymer ein dielektrisches Elastomer mit einem spezifischen elektrischen Volumenwiderstand gemäß ASTM D 257 von ≥ 10¹² bis ≤ 10¹⁷ Ohm cm. Es ist weiterhin möglich, dass das Polyurethanpolymer eine Dielektrizitätskonstante gemäß ASTM 150-98 von ≥ 5 und eine dielektrische Durchbruchsfeldstärke gemäß ASTM 149-97a von ≥ 100 V/µm aufweist. Grundsätzlich wird eine maximale Dielektrizitätskonstante und eine maximale dielektrische Durchbruchsfeldstärke angestrebt, um die Gebrauchsfähigkeit des Polymers zu optimieren.

Die Reaktionsmischung zur Herstellung des Polyurethans kann neben den Komponenten A), B), C) und D) zusätzlich auch Hilfs- und Zusatzstoffe enthalten. Beispiele für solche Hilfs- und Zusatzstoffe sind Vernetzer, Verdicker, Lösemittel, Thixotropiermittel, Stabilisatoren, Antioxidantien, Lichtschutzmittel, Emulgatoren, Tenside, Klebstoffe, Weichmacher, Hydrophobierungsmittel, Pigmente, Füllstoffe und Verlaufshilfsmittel. Bevorzugte Lösungsmittel sind Methoxypropylacetat und Ethoxypropylacetat. Bevorzugte Verlaufshilfsmittel sind Polyacrylate, insbesondere aminharzmodifizierte Acrylcopolymerisate.

Füllstoffe können beispielsweise die Dielektrizitätskonstante des Polymerelements regulieren. Vorzugsweise umfasst die Reaktionsmischung Füllstoffe zur Erhöhung der Dielektrizitätskonstanten wie Füllstoffe mit einer hohen Dielektrizitätskonstante. Beispiele hierfür sind keramische Füllstoffe, insbesondere Bariumtitanat, Titandioxid und piezoelektrische Keramiken wie Quarz oder Bleizirkoniumtitanat, sowie organische Füllstoffe, insbesondere solche mit einer hohen elektrischen Polarisierbarkeit, beispielsweise Phthalocyanine.

Außerdem ist eine hohe Dielektrizitätskonstante auch durch das Einbringen elektrisch leitfähiger Füllstoffe unterhalb der Perkolationsschwelle erzielbar. Beispiele hierfür sind Ruß, Graphit, einwandige oder mehrwandige Kohlenstoff-Nanoröhrchen, elektrisch leitfähige Polymere wie Polythiophene, Polyaniline oder Polypyrrole, oder Mischungen davon. In diesem Zusammenhang sind insbesondere solche Rußtypen von Interesse, die eine Oberflächenpassivierung aufweisen und deshalb bei niedrigen Konzentrationen unterhalb der Perkolationsschwelle zwar die Dielektrizitätskonstante erhöhen und trotzdem nicht zu einer Erhöhung der Leitfähigkeit des Polymers führen.

Hinsichtlich der Füllstoffe sollte natürlich darauf geachtet werden, dass sie nicht die optischen Eigenschaften des Elastomers bis hin zur Unbrauchbarkeit beeinträchtigen.

Angemerkt sei, dass die Begriffe "ein" und "eine" im Zusammenhang mit der vorliegenden Erfindung und insbesondere mit den Komponenten A), B) und C) nicht als Zahlwörter, sondern als unbestimmter Artikel verwendet werden, sofern der Kontext nicht eindeutig eine andere Aussage ergibt.

In einer weiteren Ausführungsform der erfindungsgemäßen Lummer-Gehrcke-Platte ändert sich der Brechungsindex n_{D} bei 589 nm des dielektrischen Elastomers beim Anlegen einer elektrischen Spannung. Das Ändern des Brechungsindexes kann zusätzlich zu einer Abstandsänderung innerhalb des Resonators die Abstimmbarkeit eines Interferometers günstig beeinflussen. Dieses erlaubt eine Stimmung des Interferometers über weite Bereiche.

In einer weiteren Ausführungsform der erfindungsgemäßen Lummer-Gehrcke-Platte ist das Material der Elektroden ausgewählt aus der Gruppe umfassend Metalle, Metalllegierungen, leitfähige Oligo-oder Polymere, leitfähige Oxide und/oder mit leitfähigen Füllstoffen gefüllte Polymere.

Vorzugsweise werden als Elektrodenmaterial Mischoxide wie zum Beispiel Indium-Zinn-Oxide (ITO) eingesetzt. Bei Verwendung solcher Mischoxide lassen sich die Elektroden in vorteilhafter Weise optisch transparent oder teildurchlässig gestalten, wodurch die Reflektivität der Elektroden variiert werden kann.

Als leitfähige Oligo- oder Polymere können beispielsweise Polythiophene, Polyaniline oder Polypyrrole eingesetzt werden. Als Füllstoffe für mit leitfähigen Füllstoffen gefüllte Polymere können beispielsweise Metalle, auch z.B. durch Ionen-Implantation, leitfähige Kohlenstoff basierte Materialien, wie Ruß, Kohlenstoff-Nanoröhrchen (carbon nanotubes, CNT) oder leitfähige Oligo-oder Polymere eingesetzt werden. Näheres hierzu findet sich in Rosset, S. et al. "Metal Ion Implantation for the Fabrication of Stretchable Electrodes on Elastomers" Adv. Funct. Mater., 2009, 19, 470-478. Der Füllstoffgehalt der Polymere liegt dabei vorzugsweise oberhalb der Perkolationsschwelle, so dass die leitfähigen Füllstoffe durchgehend elektrisch leitfähige Pfade innerhalb der mit leitfähigen Füllstoffen gefüllten Polymere ausbilden.

In einer weiteren Ausführungsform der erfindungsgemäßen Lummer-Gehrcke-Platte sind die Elektroden derart angeordnet, dass aus der Oberfläche des dielektrischen Elastomers austretendes Licht durch die Elektroden hindurch tritt. Hier bietet sich ITO (Indium-Zinn-Oxid) als Elektrodenmaterial an.

In einer weiteren Ausführungsform der erfindungsgemäßen Lummer-Gehrcke-Platte weisen die Elektroden Aussparungen auf, durch die das Licht hindurch tritt. Solche Aussparungen können beispielsweise kreisrunde Löcher, quadratische Löcher oder rechteckige Löcher sein. Je nach gewünschtem Einsatzgebiet können die Elektroden eine Vielzahl von Aussparungen aufweisen oder auch nur eine einzige Aussparung. Der mittlere Durchmesser der Aussparungen kann größer oder kleiner als die Wellenlänge des hindurchtretenden Lichts sein. Der Vorteil solcher Aussparungen in den Elektroden ist, dass auch wenig transparentes Elektrodenmaterial verwendet werden kann.

Es ist ebenfalls möglich, dass die Elektroden derart segmentartig an dem dielektrischen Elastomer angeordnet sind, dass das Licht durch zwischen den Elektrodensegmenten gebildete Spalte hindurch tritt. Vorzugsweise handelt es sich hierbei um Kammelektroden, welche auf gegenüberliegenden Seiten des dielektrischen Elastomers angeordnet sind. Der mittlere Abstand und die mittlere Breite der Spalte kann größer oder kleiner als die Wellenlänge des hindurchtretenden Lichts sein. Auch hier liegt der Vorteil darin, dass weniger transparentes Elektrodenmaterial verwendet werden kann.

Die vorliegende Erfindung betrifft ebenfalls ein Interferometer, umfassend eine Lummer-Gehrcke-Platte gemäß der vorliegenden Erfindung. Weitere Elemente des Interferometers können zum Beispiel optische Linsen, Mess- und Steuereinrichtungen und dergleichen sein. Vorzugsweise ist das erfindungsgemäße Interferometer natürlich ein Lummer-Gehrcke-Interferometer. Details zum Lummer-Gehrcke-Interferometer wurden bereits eingangs erläutert.

Ein weiterer Gegenstand der vorliegenden Erfindung ist ein Verfahren zum Betreiben eines Interferometers, umfassend die Schritte:
Bereitstellen eines erfindungsgemäßen Interferometers;
Einstrahlen von Licht in die Lummer-Gehrcke-Platte des Interferometers; und
Anlegen einer elektrischen Spannung an das dielektrische Elastomer mittels der Elektroden, wobei die elektrische Spannung ausreichend ist, um eine Veränderung des Brechungsindexes n_{D} und/oder der Dicke des dielektrischen Elastomers zu bewirken.

Beim Einstrahlen von Licht in die Lummer-Gehrcke-Platte wird selbstverständlich so vorgegangen, dass das Licht in die Platte eintritt, innerhalb der Platte zumindest teilweise reflektiert wird und aus der Platte wieder austritt. Die geometrischen Abmessungen und gegebenenfalls der Brechungsindex der Platte können durch das Anlegen der elektrischen Spannung verändert werden.

In einer Ausführungsform des erfindungsgemäßen Verfahrens wird das Interferometer als durchstimmbares Interferenzfilter betrieben. Auf diese Weise kann das Intensitätenmuster verschoben werden. Dies erlaubt letztendlich auch, ein solches Interferometer zur räumlichen Strahllenkung eines Lichtstrahls zu nutzen.

In einer weiteren Ausführungsform des erfindungsgemäßen Verfahrens umfasst das eingestrahlte Licht zwei Intensitätsmaxima mit einer ersten Wellenlänge λ₁ und einer zweiten Wellenlänge λ₂, wobei beim Anlegen einer ersten elektrischen Spannung an das dielektrische Elastomer die Transmission der Lummer-Gehrcke-Platte für Licht der Wellenlänge λ₁ größer ist als für Licht der Wellenlänge λ₂ und wobei beim Anlegen einer zweiten, von der ersten verschiedenen elektrischen Spannung an das dielektrische Elastomer die Transmission der Lummer-Gehrcke-Platte für Licht der Wellenlänge λ₂ größer ist als für Licht der Wellenlänge λ₁.

Auf diese Weise kann ein schaltbares Interferometer betrieben werden. In einem Zustand (erste Spannung) kann vorrangig oder ausschließlich Licht einer ersten Wellenlänge das Filter passieren. Die erste Spannung kann auch Null Volt betragen. Durch Anlegen der zweiten Spannung wird das Interferometer in den zweiten Zustand geschaltet und das Licht der zweiten Wellenlänge kann vorrangig oder ausschließlich das Filter passieren. Insbesondere eignet sich diese Betriebsweise für benachbarte, schmalbandige Eingangssignale.

In einer weiteren Ausführungsform des erfindungsgemäßen Verfahrens ist die an das dielektrische Elastomer angelegte elektrische Spannung während des Betriebes des Interferometers zeitlich veränderlich. In dieser Betriebsweise kann ein optisches Signal hinsichtlich seiner Intensität moduliert werden. Insbesondere kann die angelegte Spannung in einen Regelkreis eingebunden sein.

Ein weiterer Gegenstand der vorliegenden Erfindung ist die Verwendung einer Lummer-Gehrcke-Platte oder eines erfindungsgemäßen Interferometers als durchstimmbares Interferenzfilter, optischer Schalter, Strahlenlenker und/oder Intensitätsmodulator.

Die vorliegende Erfindung wird anhand der nachfolgenden Zeichnungen weiter erläutert, ohne jedoch darauf beschränkt zu sein. Es zeigen:
FIG. 1 den schematischen Aufbau einer Lummer-Gehrcke-Platte
FIG. 2 den schematischen Aufbau aus FIG. 1 in einer anderen Darstellung
FIG. 3 den schematischen Aufbau einer weiteren Lummer-Gehrke-Platte
FIG. 4 den schematischen Aufbau aus FIG. 3 in einer anderen Darstellung

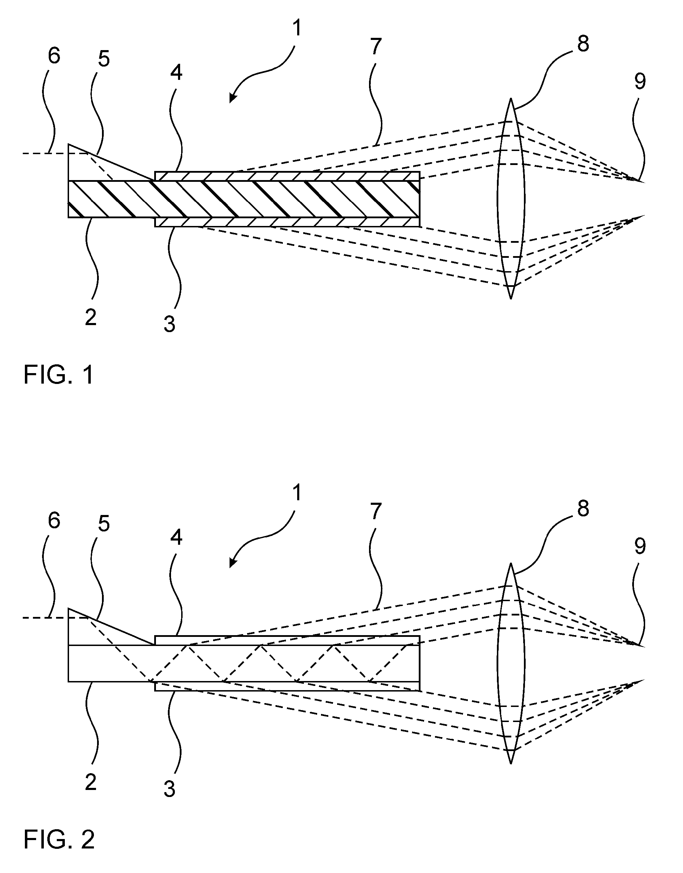

FIG. 1 zeigt den schematischen Aufbau einer Lummer-Gehrcke-Platte 1 als Bestandteil eines Lummer-Gehrke-Interferometers. Zwei planparallel zueinander ausgerichtete Elektroden 3 und 4 sind an gegenüberliegenden Seiten eines dielektrischen Elastomers 2 angeordnet. Die Elektroden 3 und 4 sind mittels nicht dargestellter elektrischer Verbindungsmittel an einen Stromkreis anschließbar. Der Dicke der Lummer-Gehrcke-Platte 1 ergibt sich im Ruhezustand, also ohne eine an die Elektroden 3 und 4 über den Stromkreis angelegte Spannung durch die Dicke des dielektrischen Elastomers 2. Zur Vereinfachung wurden Lichtbrechungseffekte an den Grenzflächen zu den Elektroden 3, 4 nicht gesondert dargestellt.

Licht 6 aus einer Lichtquelle, wie zum Beispiel einem Laser, tritt nun unter einem bestimmten Winkel in ein an einer Seite des dielektrischen Elastomers 2 angeordnetes Prisma 5 ein und wird von diesem durch dessen refraktive Eigenschaften abgelenkt, so dass es mit einem entsprechend geänderten Winkel in das dielektrische Elastomer 2 eintritt. In diesem wird es nun an den Grenzflächen teilweise reflektiert. Die austretenden Lichtstrahlen 7 werden über eine Linse 8 kollimiert, auf einen Punkt 9 fokussiert und zur Interferenz gebracht. Am Punkt 9 kann dann geeigneter Detektor wie zum Beispiel ein Photomultiplier oder CCD-Sensor vorgesehen sein. Zur Vereinfachung wurden die Strahlengänge durch die Linse 8 nur schematisch dargestellt.

Die Interferenzen im Spektrum sind von der Dicke der Lummer-Gehrcke-Platte 1 sowie der Brechzahl des dielektrischen Elastomers 2 abhängig. Durch Anlegen einer Spannung an die Elektroden 3 und 4 verändert das dielektrische Elastomer 2 seine Ausdehnung, wodurch sich die Dicke ändert. Darüber hinaus ändert das dielektrische Elastomer 2 je nach eingesetztem Material und angelegter Spannung seine Brechzahl. Beide Effekte führen zu einer Veränderung der Beugung des eingestrahlten Lichts, so dass durch Anlegen unterschiedlicher Spannungen die Interferenzen und hierdurch die Emissionsmaxima des emittierten Lichtes verändert werden können.

Wenn vorgesehen ist, dass Lichtstrahlen 7 durch die Elektroden 3, 4 hindurch austreten, sollten diese Elektroden für Licht der entsprechenden Wellenlänge möglichst transparent sein. Hier bietet sich ITO (Indium-Zinn-Oxid) als Elektrodenmaterial an. Es ist jedoch ebenfalls möglich, dass in nicht transparenten Elektroden Aussparungen für austretende Lichtstrahlen vorgesehen sind.

FIG. 2 zeigt dieselbe Lummer-Gehrcke-Platte wie in FIG. 1, wobei zur besseren Übersicht die Schraffuren für das Material der dielektrischen Elastomerschicht 2 und der Elektroden 3, 4 ausgelassen wurden. Dafür werden schematisch Reflexionen des Lichtstrahls innerhalb des Elastomers 2 aufgezeigt.

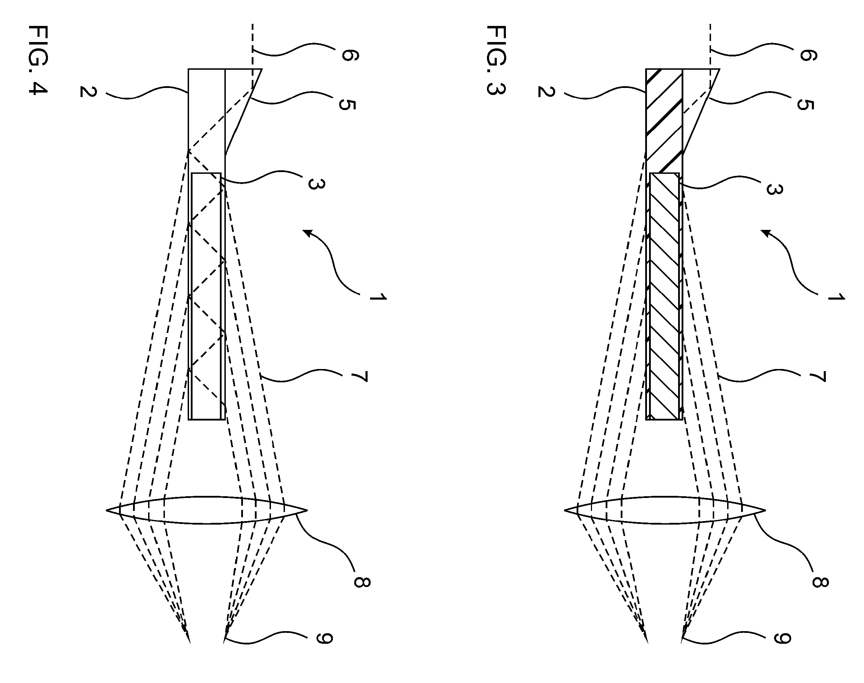

FIG. 3 zeigt den schematischen Aufbau einer weiteren Lummer-Gehrke-Platte als Bestandteil eines Lummer-Gehrke-Interferometers. Im Unterschied zur in FIG. 1 gezeigten Platte sind die Elektroden nun so angeordnet, dass aus dem Elastomer 2 austretendes Licht 7 nicht mehr durch sie hindurch treten muss. Vielmehr sind die Elektroden seitlich am Elastomer angeordnet. Dann kann austretendes Licht ungehindert die Ober- und Unterseite des Elastomers passieren. Zu sehen ist die Elektrode 3 in Draufsicht. Ihr gegenüber auf der anderen Seite des Elastomers 2 ist die nicht gezeigte weitere Elektrode angebracht.

FIG. 4 zeigt dieselbe Lummer-Gehrcke-Platte wie in FIG. 3, wobei zur besseren Übersicht die Schraffuren für das Material der dielektrischen Elastomerschicht 2 und der Elektrode 3 ausgelassen wurden. Dafür werden schematisch Reflexionen des Lichtstrahls innerhalb des Elastomers 2 aufgezeigt.

## Patentansprüche

1. Lummer-Gehrcke-Platte (1),
**dadurch gekennzeichnet, dass**
diese wenigstens ein von eingekoppeltem Licht durchstrahltes dielektrisches Elastomer (2) sowie zwei an gegenüberliegenden Seiten des dielektrischen Elastomers (2) angeordnete Elektroden (3, 4) umfasst und der Brechungsindex n_{D} und/oder die Dicke der Lummer-Gehrcke-Platte (1) durch Anlegen einer elektrischen Spannung an die Elektroden (3, 4) veränderbar ist.

2. Lummer-Gehrcke-Platte gemäß Anspruch 1,
**dadurch gekennzeichnet, dass**
das Elastomer (2) ausgewählt ist aus der Gruppe umfassend Polyurethan-Elastomere, Silikon-Elastomere und/oder Acrylat-Elastomere.

3. Lummer-Gehrcke-Platte gemäß Anspruch 1 oder 2,
**dadurch gekennzeichnet, dass**
der Brechungsindex n_{D} bei 589 nm des dielektrischen Elastomers (2) sich beim Anlegen einer elektrischen Spannung ändert.

4. Lummer-Gehrcke-Platte gemäß einem der Ansprüche 1 bis 3,
**dadurch gekennzeichnet, dass**
das Material der Elektroden (3, 4) ausgewählt ist aus der Gruppe umfassend Metalle, Metalllegierungen, leitfähige Oligo- oder Polymere, leitfähige Oxide und/oder mit leitfähigen Füllstoffen gefüllte Polymere.

5. Lummer-Gehrcke-Platte gemäß einem der Ansprüche 1 bis 4,
**dadurch gekennzeichnet, dass**
die Elektroden (3, 4) derart angeordnet sind, dass aus der Oberfläche des dielektrischen Elastomers (2) austretendes Licht durch die Elektroden (3, 4) hindurch tritt.

6. Lummer-Gehrcke-Platte gemäß einem der Ansprüche 1 bis 5,
**dadurch gekennzeichnet, dass**
die Elektroden (3, 4) Aussparungen aufweisen, durch die das Licht hindurch tritt, und/oder derart segmentartig an dem dielektrischen Elastomer (2) angeordnet sind, dass das Licht durch zwischen den Elektrodensegmenten gebildete Spalte hindurch tritt.

7. Interferometer, umfassend eine Lummer-Gehrcke-Platte gemäß einem der Ansprüche 1 bis 6.

8. Verfahren zum Betreiben eines Interferometers, umfassend die Schritte:
Bereitstellen eines Interferometers gemäß Anspruch 7;
Einstrahlen von Licht in die Lummer-Gehrcke-Platte (1) des Interferometers; und
Anlegen einer elektrischen Spannung an das dielektrische Elastomer (2) mittels der Elektroden (3, 4), wobei die elektrische Spannung ausreichend ist, um eine Veränderung des Brechungsindexes n_{D} und/oder der Dicke des dielektrischen Elastomers (2) zu bewirken.

9. Verfahren gemäß Anspruch 10,
**dadurch gekennzeichnet, dass**
das Interferometer als durchstimmbares Interferenzfilter betrieben wird.

10. Verfahren gemäß Anspruch 8 oder 9,
**dadurch gekennzeichnet, dass**
das eingestrahlte Licht zwei Intensitätsmaxima mit einer ersten Wellenlänge λ₁ und einer zweiten Wellenlänge λ₂ umfasst,
wobei beim Anlegen einer ersten elektrischen Spannung an das dielektrische Elastomer (2) die Transmission der Lummer-Gehrcke-Platte (1) für Licht der Wellenlänge λ₁ größer ist als für Licht der Wellenlänge λ₂ ist und
wobei beim Anlegen einer zweiten, von der ersten verschiedenen elektrischen Spannung an das dielektrische Elastomer (2) die Transmission der Lummer-Gehrcke-Platte (1) für Licht der Wellenlänge λ₂ größer ist als für Licht der Wellenlänge λ₁ ist.

11. Verfahren gemäß einem der Ansprüche 8 bis 10,
**dadurch gekennzeichnet, dass**
die an das dielektrische Elastomer (2) angelegte elektrische Spannung während des Betriebes des Interferometers zeitlich veränderlich ist.

12. Verwendung einer Lummer-Gehrcke-Platte gemäß einem der Ansprüche 1 bis 6 oder eines Interferometers gemäß Anspruch 7 als durchstimmbares Interferenzfilter, optischer Schalter, Strahlenlenker und/oder Intensitätsmodulator.
